# EUROPEAN PATENT APPLICATION

(11) **EP 1 835 627 A1**
(43) Date of publication of application: **19.09.2007**
(21) Application number: 06300230.7
(22) Date of filing: 14.03.2006
(51) Int. Cl.: H04B 1/10, H04B 1/52

(54) **Method and apparatus for reducing out-of-band interference generated by a bluetooth device**

(71) Applicant: MOTOROLA, INC., Schaumburg, IL 60196 (US)
(72) Inventor: Martinez-Nieto, David, 31000, Toulouse (FR); Abdesselem, Ouelid, 31000, Toulouse (FR); Longepe, Philippe, 31000, Toulouse (FR)
(74) Representative: Delumeau, François Guy

(57) **Abstract**

A method and apparatus for reducing out-of-band interference includes reducing out-of-band interference between a first communication device (102) and a second communication device (104), such as a Bluetooth communication device, by an out-of-band interference reducer (134) controlling the second communication device (104) in response to the first communication device (102). The transmit power or an application of the second communication device (104) could be controlled in response to arbitration parameters of the first communication device, such as signal strength and/or signal quality.

## Description

### FIELD OF THE INVENTION

The present invention generally relates to wireless communication systems, and more particularly relates to a method and apparatus for reducing radio frequency (RF) interference generated by a Bluetooth^{®} wireless communication device.

### BACKGROUND OF THE INVENTION

Bluetooth is a low cost wireless communication technology operating in the unlicensed 2.4 gigahertz (GHz) frequency band. Bluetooth devices transmit and receive wireless transmissions which can interfere with other radio systems in the same 2.4 GHz frequency band (e.g., wireless internet local area network connections such as WiFi), as well as radio systems in nearby frequency bands (e.g., XM satellite radio in the 2.3 GHz frequency band). Complex collaborative systems have been developed for reducing in band interference between Bluetooth devices and, for example, WiFi devices. Without a system for reducing out of band interference between Bluetooth devices and devices operating in nearby frequency bands such as XM satellite radio receivers, it is impossible to provide both capabilities in a single device, such as XM satellite radio reception and Bluetooth communication capability in a single device.

Thus, what is needed is a method and apparatus for reducing out of band interference from a Bluetooth device. Furthermore, other desirable features and characteristics of the present invention will become apparent from the subsequent detailed description of the invention and the appended claims, taken in conjunction with the accompanying drawings and this background of the invention.

### BRIEF DESCRIPTION OF THE DRAWINGS

The present invention will hereinafter be described in conjunction with the following drawing figures, wherein like numerals denote like elements, and
FIG. 1 is a block diagram of a wireless communication device communicating with a Bluetooth-enabled communication device in accordance with an embodiment of the present invention;
FIG. 2 is a block diagram of an out-of-band interference reducer of the wireless communication device of FIG. 1 in accordance with the embodiment of the present invention;
FIG. 3 is an arbitration profiler table in accordance with the embodiment of the present invention; and
FIG. 4 is a state diagram of the operation of the out-of-band interference reducer of FIG. 2 in accordance with the embodiment of the present invention.

### DETAILED DESCRIPTION OF THE INVENTION

A method for reducing out-of-band interference in accordance with the present invention includes the step of reducing out-of-band interference between a first communication device and a second communication device by controlling the second communication device in response to the first communication device. The transmit power or an application of the second communication device could be controlled in response to arbitration parameters of the first communication device, such as signal strength and/or signal quality.

An apparatus for reducing out-of-band interference in accordance with the present invention includes a first communication device for receiving radio frequency (RF) signals in a first frequency band, a second communication device for wirelessly communicating in a second frequency band different from the first frequency band, and an out-of-band interference reducer coupled to the first communication device and the second communication device and reducing out-of-band interference therebetween by controlling the second communication device in response to the first communication device.

The following detailed description of the invention is merely exemplary in nature and is not intended to limit the invention or the application and uses of the invention. Furthermore, there is no intention to be bound by any theory presented in the preceding background of the invention or the following detailed description of the invention.

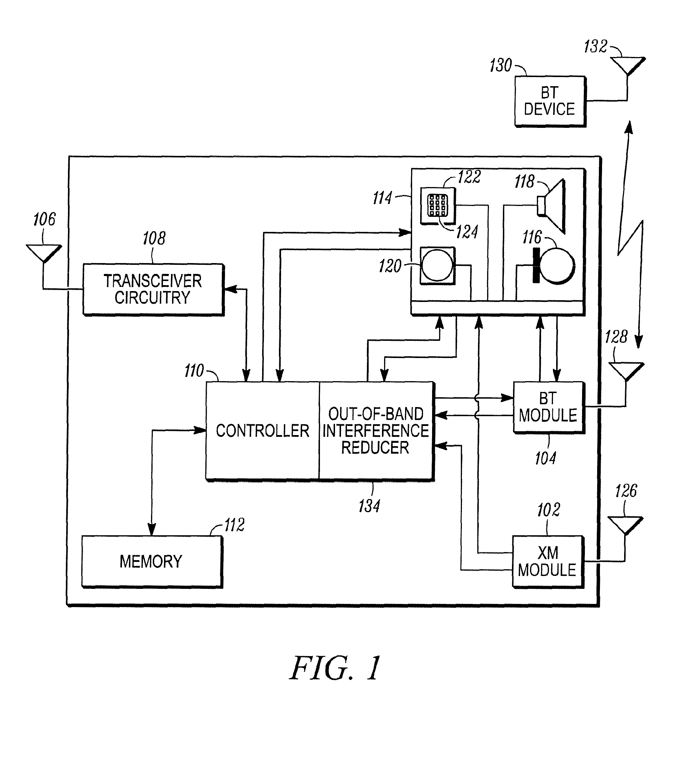

Referring to FIG. 1, a wireless communication device 100, such as a cellular telephone handset, in accordance with the embodiment of the present invention includes a satellite radio receiver module 102 and a Bluetooth communication module 104. Although the apparatus 100 depicted is a wireless communication device, the apparatus can be a portable electronic device, a computer, a home stereo system, or any other environment which includes a first communication device such as the satellite radio receiver module 102 and a second communication device such as the Bluetooth communication module 104.

The wireless communication device 100 includes an antenna 106 for receiving and transmitting radio frequency (RF) signals. Transceiver circuitry 108 demodulates and decodes RF signals received from cellular telephone system to derive information therefrom and is coupled to a controller 110 for providing the decoded information thereto for utilization thereby in accordance with the function(s) of the wireless communication device 100. The controller 210 also provides information to the transceiver circuitry 108 for encoding and modulating information into RF signals for transmission from the antenna 106.

As is well-known in the art, the controller 110 is typically coupled to a memory device 112 and a user interface 114 to perform the functions of the wireless communication device 100. The user interface 114 includes a microphone 116, a speaker 118 and a display 120 which may be designed to accept touch screen inputs. The user interface 114 also includes one or more key inputs 122, including a keypad 124.

The satellite radio receiver module 102 is coupled to a second antenna 126 to receive satellite radio RF signals, such as XM satellite radio signals, in a first frequency band. The Bluetooth communication module 104 is a Bluetooth-enabled wireless communication device coupled to a third antenna 128 for communicating in a second frequency band in accordance with Bluetooth protocol with another communication device 130 which is also Bluetooth-enabied via an antenna 132. For example, the communication device 130 could be a stereo headset, a cellular telephone headset with cellular call capabilities or a Bluetooth module within stereo equipment to provide Bluetooth capability thereto. Both the satellite radio receiver module 102 and the Bluetooth communication module 104 are coupled to the user interface 114 for providing output to a user via, for example, the speaker 118 and for the Bluetooth communication module 104 to receive input from a user via, for example, the microphone 116.

In accordance with the present invention, the controller 110 includes an out-of-band interference reducer 134. The satellite radio receiver module 102 will receive XM satellite radio RF signals in the first frequency band, the 2.35 GHz frequency band. The Bluetooth communication module 104 will transmit and receive RF signals in the second frequency band, the unlicensed 2.4GHz frequency band, and may or may not use applications for the operation thereof, such as adaptive frequency hopping (AFH) applications. The RF signals for the two modules 102, 104 will not interfere with the cellular communications of the wireless communication device 100. However, though the two modules 102, 104 operate in different frequency bands, harmonics of RF signals transmitted from or received by the Bluetooth communication module 104 can cause out-of-band interference with RF signals received by the satellite radio receiver module 102. This interference has its origin in the small spectral distance between the two bands (2.35GHz for XM and 2.4GHz for Bluetooth) that allows the harmonics of the frequency-hopped signal generated by Bluetooth to appear in the XM band with power levels beyond the receiver selectivity of the satellite radio receiver module 102. As described in more detail below, the out-of-band interference reducer 134 is coupled to the satellite radio receiver module 102 and the Bluetooth communication module 104 for reducing interference therebetween. The out-of-band interference reducer 134 can be implemented in either hardware or so are and, while shown as implemented in the controller 110, the out-of-band interference reducer 134 could be provided as a separate module or component of the wireless communication device 100.

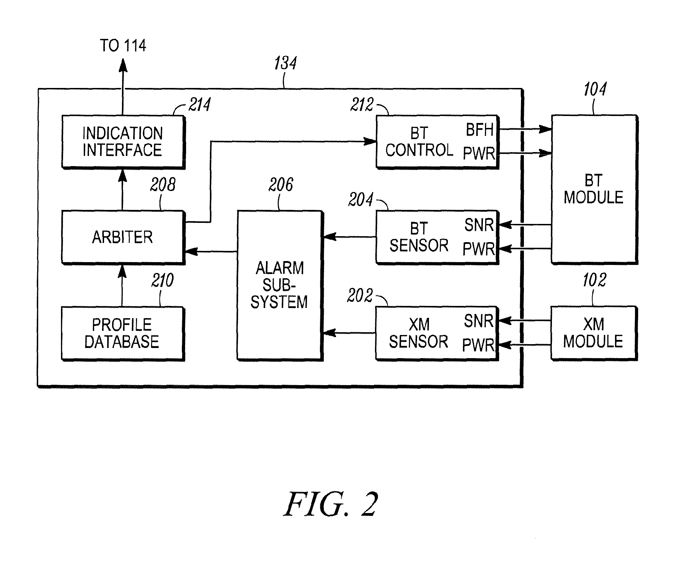

Referring to FIG. 2, an embodiment of the out-of-band interference reducer 134 which monitors the signals of the satellite radio receiver module 102 and the Bluetooth module 104 and, in response thereto, modifies the characteristics of the Bluetooth module 104 is shown in more detail. The out-of-band interference reducer 134 includes a satellite radio receiver sensor 202 and a Bluetooth sensor 204 for measuring the signal characteristics such as signal qualities and signal power levels of the satellite radio receiver module 102 and the Bluetooth module 104, respectively, each sensor 202, 204 including a signal-to-noise ratio (SNR) input for measuring the signal quality and a signal power input for measuring the signal strength.

The satellite radio receiver sensor 202 and the Bluetooth sensor 204 are coupled to an alarm subsystem 206 to provide data thereto, the alarm subsystem 206 generating status messages for an arbiter 208 in response to the data received. The alarm subsystem 206 can be interrupt triggered by the use of system interrupts from the sensors 202, 204 or pooling triggered with a programmable timer utilizing information provided by the XM sensor 202 and the Bluetooth sensor 204. The sensors 202, 204 are operated by means of an alarm subsystem request sent thereto from the alarm subsystem 206 for controlling the operation thereof. In addition, the alarm subsystem 206 generates status messages or alerts to be sent to the arbiter 208 when the measures from the sensors exceed defined thresholds. The status messages contain the values for the following variable parameters: Bluetooth signal quality, Bluetooth signal strength, satellite radio receiver signal quality, satellite radio receiver signal strength, and a state where no satellite radio receiver signal is detected. The alarm subsystem 206 also supports the commands from the arbiter 208, including a set_pooling_timer(time) command which modifies the timer of the pooling process for measuring the signal quality in response to the time indicated and a set_new_threshold(threshold_id, value) command which allows the arbiter 208 to dynamically modify the threshold values.

The arbiter 208 is a state machine that will modify the operation of the Bluetooth module 104 in response to information received from the satellite radio receiver sensor 202 and the Bluetooth sensor 204 and information contained in a profile database 210.

The profile database 210 is a repository of profiles defined for each class of BT device and contains the initial conditions to be applied to the Bluetooth module 104 when connecting to another Bluetooth communication device 130 (FIG. 1) as well as the arbitration parameters to be applied to the Bluetooth module 104 in response to information received from the satellite radio receiver sensor 202 and the Bluetooth sensor 204. The profile database 210 may be located in the out-of-band interference reducer 134, as shown in FIG. 2, or may be memory locations within the memory 112 (FIG. 1) which may be accessed by the out-of-band interference reducer 134. Also, the threshold power and AFH could be stored in the profile database 210.

By accessing the profile database 206, the arbiter 208 can determine arbitration profiles adapted to each class of Bluetooth device. In addition, the arbiter 208 can access signals from the alarm subsystem 206 for the measures of the links qualities. The arbiter 208 provides signals to a Bluetooth controller 212 to modify the power output and the AFH mask of the Bluetooth module 104. Modification of the AFH mask of the Bluetooth module 104 may include increasing the AFH mask which reduces the frequency band available for adaptive frequency hopping by the Bluetooth module 104. The Bluetooth communication module 104 may be a Bluetooth chipset and the Bluetooth sensor 204 and the Bluetooth controller 212 may be software units built over the Bluetooth communication module 104 stack. The Bluetooth controller 212 may then directly apply the modifications of the AFH mask modifying the connection to the Bluetooth device 130 and also modulate the maximal power output of the Bluetooth chipset.

In addition, the arbiter 208 provides signals to an indication interface 214 coupled to the user interface 114 to provide indications, alerts and user interaction requests to a user thereby. The indications, alerts and user interaction requests may include indication of bad signal quality, a signal power drop or losing a Bluetooth communication connection. The indication interface 214 may be a software unit whose mission is to send to the user interface 114 and the controller 110 messages or indications requiring an action from the user when the arbiter 208 dictates it necessary. The indication interface 214 may also specify the type of message to be sent to the user.

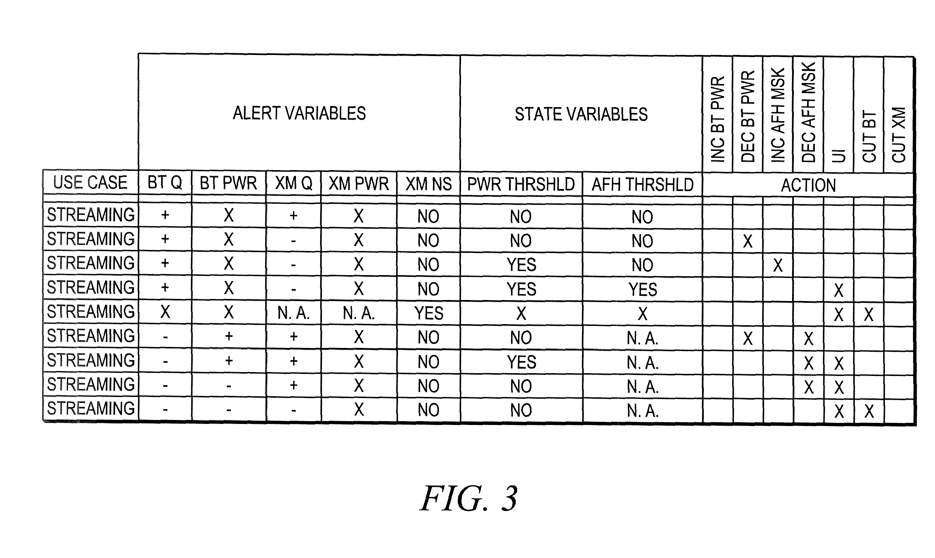

Referring to FIG. 3, an example of an arbitration profiler or action table is shown. This example is for a headset stereo Bluetooth device without call capabilities. The actions to be taken are classified in accordance with three types of parameters: a use case applicable during the current operation, alert variables provided by the alarm subsystem, and state variables calculated by the arbiter. The alert variables comprise data from the current connection quality state of both the satellite radio receiver module 102 and the Bluetooth module 104. The alert variables are: the quality of the Bluetooth signal (BT Q), the signal strength of the Bluetooth signal (BT Pwr), the quality of the satellite radio signal (XM Q), the signal strength of the satellite radio signal (XM Pwr), and whether no satellite radio signal is detected (XM NS). The state variables are calculated by the arbiter 208 and imply if the maximal arbitration thresholds have been achieved. For example, the arbiter 208 can determine whether the maximum power threshold (Pwr thrshld) for the Bluetooth module 104 has been reached by comparing the power threshold calculated by the arbiter 208 with the maximum power threshold stored in the profile database 210.

In accordance with the table of FIG. 3, for each ensemble of variables a group of actions is taken. The actions that can be applied are: an increase of the uplink power of the Bluetooth module 104 (Inc BT Pwr), a decrease of the uplink power of the Bluetooth module 104 (Dec BT Pwr), an increase of the AFH mask of the Bluetooth module 104 (Inc AFH msk), a decrease of the AFH mask of the Bluetooth module 104 (Dec AFH msk), sending a user indication (U.I.), turning off the Bluetooth module 104 (Cut BT), or turning off the satellite radio receiver module 102 (Cut XM). Both the action table and the threshold limits may be static or dynamic.

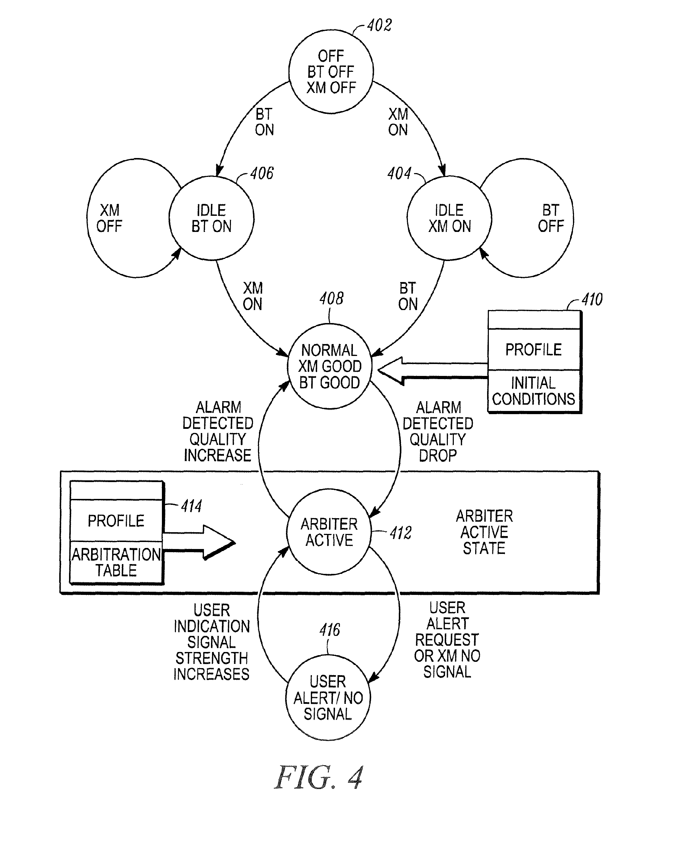

Referring to FIG. 4, a state diagram of the out-of-interference reducer 134 is shown. The arbitration procedure is only active if both the satellite radio receiver module 102 and the Bluetooth module 104 are used simultaneously. Thus initially, when both modules are off 402, no arbitration procedure is activated. Likewise, if one module 102, 104 is turned ON (XM ON 404 or BT ON 406), the arbiter 208 idles. When one of the modules 102, 104 is no longer used, the arbiter 208 will be in an Idle state.

When both modules 102, 104 are activated 408, the arbiter goes into Normal mode applying 410 the initial conditions for power output and AFH mask for the Bluetooth communication module 104. The arbiter thresholds are also initialized 410 from the values stored in the profile database 210. The arbiter will apply 410 the initial profile conditions by determining a Bluetooth classification of the connected device 130 (FIG. 1), such as whether the connected device 130 is an AFH communication device or a non-AFH communication device and retrieving the corresponding profile from the profile database 210. Operation will remain in the normal operating state 408 state so long as the arbiter 208 does not receive an alarm of a signal quality or signal strength drop.

The arbiter 208 switches to an Arbiter Active state 412 in response to detection of a signal quality drop. For example, the arbiter 208 will switch to the Arbiter Active state 412 in response to a signal quality drop alarm signal from the alarm subsystem 206 generated in response to the XM sensor 202 detecting a drop in the signal quality of the signal from the satellite radio receiver module 102.

In the Arbiter Active state 412 the pooling period of the alarm subsystem 206 is configured 414 to have improved feedback in accordance with the operation of the arbiter 208. The arbiter will analyze the plurality of variable arbitration parameters of the arbitration profiler using the profile retrieved 414 from the profile database 210 to control the Bluetooth communication module 104 in response to the arbitration profiler or action table. Then the arbiter 208 will apply the actions appearing in the action table to reduce the out-of-band interference between the modules 102, 104, such as reducing a selectable transmit power of the Bluetooth communication module 104 (Dec BT Pwr action of the action table of FIG. 3) or adjusting the frequency band utilized by the Bluetooth communication module 104 for communication with the other Bluetooth-enable wireless communication device 130 (Inc AFH Msk or Dec AFH Msk actions of the action table of FIG. 3).

For example, the arbiter 208 can reduce the out-of-band interference between the modules 102, 104 by defining a decreased AFH mask for the Bluetooth communication module 104 which reduces a frequency width of the frequency band of operation of the Bluetooth communication module 104. The arbiter 208 can additionally reduce the out-of-band interference by allocating the reduced-width frequency band to selected carrier frequencies more than a predetermined frequency from the frequency band of operation of the satellite radio receiver module.

Also, the out-of band interference may be reduced in response to an application of the Bluetooth communication module 104, such as an adaptive frequency hopping application, or the out-of band interference may be reduced in response to the communication between the Bluetooth communication module 104 and the other Bluetooth communication device 130, such as whether the two Bluetooth-enabled communication devices 104, 130 operate on a reduced set of frequencies or whether they are non-AFH communication devices or an AFH communication devices.

Several of the variable arbitration parameters are state parameters and allow the arbiter 208 to adapt itself to the environment. In order to avoid closed loop situations and to better adapt itself to the environment characteristics, the arbiter 208 may modify the internal quality and signal strength thresholds of the alarm subsystem 206, thus allowing the arbiter 208 to redefine the predetermined power state for determining the power threshold or signal strength threshold of the Bluetooth communication module 104 or redefine the predetermined AFH state for determining the AFH threshold state of the Bluetooth communication module 104.

In some situations, the alarm subsystem 206 will detect extreme conditions, such as a communication module 104 or a satellite radio receiver module 102 loss of signal or loss of coverage, that will put the system in a User Alert/No Signal state 416. In this state 416 neither the Bluetooth communication module 104 nor the satellite radio receiver module 102 capabilities can be guaranteed and user interaction may be required. The User Alert/No Signal state 416 causes the arbiter 208 to provide a signal to the indication interface 214 which may be used as a trigger for operations of the controller 110 or, as indicated in FIG. 2, may provide user alerts directly to the user interface 114 for presentation to a user via the display 120 and/or the speaker 118.

Only an indication of signal quality increase from the alarm subsystem 206 or a user interaction via the indication interface 114 can get the arbiter 208 out of the User Alert/No Signal state 416. An appropriate signal indication or user interaction will cause the arbiter 208 to return to the Arbiter Active state 412, and, possibly, to the normal operation state 408.

Thus, a method and apparatus for reducing out-of-band interference from a Bluetooth device has been described which allows for a Bluetooth communication module 104 and another module 102, even an XM satellite communication receiver operating in a frequency band very near to the operational frequency band of the Bluetooth device, to be incorporated into a single wireless communication device. While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. An apparatus comprising:
a first communication device (102) for receiving radio frequency (RF) signals in a first frequency band;
a second communication device (104) for wirelessly communicating in a second frequency band different from the first frequency band;
an out-of-band interference reducer (134) coupled to the first communication device (102) and the second communication device (104) and reducing out-of-band interference therebetween by controlling the second communication device (104) in response to the first communication device (102).

2. The apparatus of Claim 1 wherein the second communication device (104) transmits RF signals at a selectable transmit power, and
wherein the out-of-band interference reducer (134) reduces the out-of-band interference by reducing the selectable transmit power of the second communication device (104) in response to the first communication device (102).

3. The apparatus of Claim 2 wherein the second communication device (104) transmits and receives RF signals on selectable carrier frequencies within the second frequency band, and
wherein the out-of-band interference reducer (134) reduces the out-of-band interference by selecting one or more of the selectable carrier frequencies for the second communication device (104) to transmit and receive RF signals in response to the first frequency band.

4. The apparatus of Claim I wherein the out-of-band interference reducer (134) reduces the out-of-band interference by adjusting the second frequency band.

5. The apparatus of Claim 4 wherein the out-of-band interference reducer (134) reduces the out-of-band interference by reducing a width of the second frequency band.

6. The apparatus of Claim 5 wherein the out-of-band interference reducer (134) reduces the out-of-band interference by allocating the second frequency band to selected carrier frequencies more than a predetermined frequency width from the first frequency band.

7. The apparatus of Claim 1 wherein the second communication device (104) uses an application to wirelessly communicate, and
wherein the out-of-band interference reducer (134) reduces the out-of-band interference in response to the application.

8. The apparatus of Claim 1 wherein the second communication device (104) wirelessly communicates with a third communication device (130), and
wherein the out-of-band interference reducer (134) reduces the out-of-band interference in response to the third communication device (130).

9. The apparatus of Claim 8 wherein the third communication device (130) is a non-adaptive frequency hopping (non-AFH) communication device.

10. The apparatus of Claim 9 wherein the second communication device (104) is an AFH communication device.

11. The apparatus of Claim 8 wherein the second and third communication devices wirelessly communicate on a reduced set of frequencies, and
wherein the out-of-band interference reducer (134) reduces the out-of-band interference in response to the reduced set of frequencies.

12. The apparatus of Claim 1 wherein the out-of-band interference reducer (134) comprises an arbitration profiler comprising a plurality of actions, each of the plurality of actions determined in response to one or more of a plurality of arbitration parameters.

13. The apparatus of Claim 12 wherein the plurality of arbitration parameters includes one or more of a signal quality of the first communication device, a signal strength of the first communication device, a signal quality of the second communication device, a signal strength of the second communication device (104), a power threshold state for the second communication device (104), or an AFH threshold state for the second communication device (104).

14. The apparatus of Claim 13 wherein the out-of-band interference reducer (134) determines whether the power threshold state for the second communication device (104) is within a predetermined power state for the second communication device.

15. The apparatus of Claim 13 wherein the out-of-band interference reducer (134) determines whether the AFH threshold state for the second communication device (104) is within a predetermined AFH state for the second communication device.

16. The apparatus of Claim 1 wherein the second communication device (104) is a Bluetooth-enabled wireless communication device.

17. The apparatus of Claim 1 wherein the first communication device (102) is an XM satellite radio receiving device.

18. The apparatus of Claim 1 wherein the apparatus is a cellular telephone handset (100).

19. A method for reducing out-of-band interference comprising the step of reducing out-of-band interference between a first communication device (102) and a second communication device (104) by controlling the second communication device (104) in response to the first communication device (102).

20. The method of Claim 19 wherein the step of reducing out-of-band interference comprises the steps of:
measuring signal characteristics of signals received by the first communication device (102) and the second communication device (104); and
reducing a selectable transmit power of the second communication device (104) in response to the signal characteristics measured.

21. The method of Claim 19 wherein the step of reducing out-of-band interference comprises the steps of:
reducing a selectable transmit power of the second communication device (104) in response to the first communication device (102); and
selecting one or more of selectable carrier frequencies for the second communication device (104) to transmit and receive RF signals in response to a first frequency band in which the first communication device (102) communicates.

22. The method of Claim 19 wherein the step of reducing out-of-band interference comprises the step of adjusting a second frequency band of the second communication device.

23. The method of Claim 22 wherein the step of reducing out-of-band interference comprises the step of reducing a width of the second frequency band.

24. The method of Claim 23 wherein the step of reducing the width of the second frequency band comprises the step of reducing the width of the second frequency band and allocating the reduced-width second frequency band to selected carrier frequencies more than a predetermined frequency width from a first frequency band of the first communication device (102).

25. The method of Claim 19 wherein the second communication (104) device uses an application to wirelessly communicate, and wherein the step of reducing the out-of-band interference comprises the step of reducing the out-of-band interference in response to the application.

26. The method of Claim 19 wherein the second communication device (104) wirelessly communicates with a third communication device (130), and wherein the step of reducing the out-of-band interference comprises the step of reducing the out-of-band interference in response to the third communication device (130).

27. The method of Claim 26 wherein the step of reducing the out-of-band interference comprises the steps of:
determining whether the third communication device (130) is a non-adaptive frequency hopping (non-AFH) communication device; and
reducing the out-of-band interference in response to whether the third communication device (130) is a non-AFH communication device.

28. The method of Claim 27 wherein the determining step comprises the steps of:
determining whether the third communication device (130) is a non-adaptive frequency hopping (non-AFH) communication device; and
determining whether the second communication device (104) is an AFH communication device, and
wherein the step of reducing the out-of-band interference comprises the step of reducing the out-of-band interference in response to whether the third communication device (130) is a non-AFH communication device and whether the second communication device (104) is an AFH communication device.

29. The method of Claim 26 wherein the second and third communication devices (130) wirelessly communicate on a reduced set of frequencies, and wherein the step of reducing the out-of-band interference comprises the step of reducing the out-of-band interference in response to the reduced set of frequencies.

30. The method of Claim 19 wherein the step of reducing the out-of-band interference comprises the step of reducing the out-of-band interference in response to one or more of a plurality of actions in an arbitration profiler, each of the plurality of actions determined in response to one or more of a plurality of arbitration parameters, and wherein the step of reducing the out-of-band interference comprises the step of reducing the out-of-band interference in response to one or more of the plurality of actions.

31. The method of Claim 30 wherein the plurality of arbitration parameters includes one or more of a signal quality of the first communication device, a signal strength of the first communication device, a signal quality of the second communication device, a signal strength of the second communication device, a power threshold state for the second communication device, or an AFH threshold state for the second communication device.

32. The method of Claim 31 wherein the step of reducing the out-of-band interference in response to the one or more of the plurality of actions comprises the step of determining whether the power threshold state for the second communication device is within a predetermined power state for the second communication device.

33. The method of Claim 31 wherein the step of reducing the out-of-band interference in response to the one or more of the plurality of actions comprises the step of determining whether the AFH threshold state for the second communication device (104) is within a predetermined AFH state for the second communication device (104).

34. The method of Claim 19 wherein the second communication device (104) is a Bluetooth-enabled wireless communication device.

35. The method of Claim 19 wherein the first communication device (102) is an XM satellite radio receiving device.

36. The method of Claim 19 wherein the first communication device (102) and the second communication device (104) are incorporated into a wireless communication device.

37. The method of Claim 19 wherein the wireless communication device (100) is a cellular telephone handset.
